# EUROPEAN PATENT SPECIFICATION

(11) **EP 3 565 732 B1**
(45) Date of publication and mention of the grant of the patent: **27.04.2022**
(21) Application number: 18878506.7
(22) Date of filing: 11.10.2018
(51) Int. Cl.: B60L 15/00, H02P 27/04

(54) **A METHOD FOR GENERATING HIGH STARTING TORQUE IN AN ASYNCHRONOUS MOTOR AT A LOW POWER CONSUMPTION**
VERFAHREN ZUM ERZEUGEN EINES HOHEN ANLAUFDREHMOMENTS IN EINEM ASYNCHRONMOTOR BEI GERINGER LEISTUNGSAUFNAHME
PROCÉDÉ DE GÉNÉRATION DE COUPLE DE DÉMARRAGE ÉLEVÉ DANS UN MOTEUR ASYNCHRONE À FAIBLE CONSOMMATION D'ÉNERGIE

(30) Priority: 16.11.2017 HU 1700465
(43) Date of publication of application: 13.11.2019
(73) Proprietor: Electromega Kft., 4031 Debrecen (HU)
(72) Inventor: BARTHA, István Ákos, 4028 Debrecen (HU); VITÉZ, Attila Csaba, 4200 Hajdúszoboszló (HU)
(74) Representative: Keilitz, Wolfgang
(86) International application number: PCT/IB2018/057882
(87) International publication number: WO 2019/097323

(56) References cited:
- EP-A1- 2 430 506
- CN-A- 101 734 174
- US-A- 3 149 275
- US-A1- 2009 243 523
- US-A1- 2012 086 383
- DANFOSS: "Facts Worth Knowing about Frequency Converters", Handbook VLT Frequency Converters, vol. 1 December 2014 (2014-12), page 1, XP055614290, Retrieved from the Internet: URL:http://files.danfoss.com/download/Driv es/DKDDPM403A302_Facts.pdf

## Description

The present invention relates to a method for generating high starting torque in an asynchronous motor at a low power consumption, using a program-controlled, parametrizable inverter designed and manufactured for industrial use.

Asynchronous motors are suitable for driving rotating mechanical systems at a high level of efficiency and operational safety. However, when driving a mechanical system, starting the motor can require a large amount of torque. This can present difficulties. When using simple coupling, that is, supplying the motor with voltage according to the desired RPM, high current is needed for starting the motor. As the voltage in an AC network remains constant, consequently this also means high power consumption. Many different coupling schemes are known for limiting the power consumption at start-up, but they all involve a reduction in starting torque. Using an inverter for asynchronous motors is recommended, as the inverter allows for controlling the RPM of the motor without having to switch gears. Inverter-controlled motors typically feature lower power consumption on start-up in comparison with standard couplings, with no or minimal loss of starting torque. This is an essential technical solution for battery-powered vehicles, as it is possible to supply the power required by the motor drive on start-up by connecting several low amperage batteries in parallel. Using multiple batteries results in a physically larger system overall. For vehicles, however, it is best to strictly limit the overall size of the system. In other words, this is a limiting factor for the maximum power achievable during start-up, while maximizing the engine's starting torque allows for improved navigation of inclines, which is a vital requirement when operating a vehicle. For electric vehicles, it is likewise important to keep the mass of the motor and the batteries as low as possible. Smaller motors provide less torque, and therefore need to use a torque converter. Currently, they minimize the total mass of the motor and the torque converter. This process involves optimising the ratio of the motor and the torque converter's mass. Our goal is driving electric vehicles with asynchronous motors without the use of a torque converter, as using torque converters in electric vehicles is problematic. Our experiments have shown that to have a standard asynchronous motor driven by an inverter set up according to the manufacturer's recommendations, the nominal power must be increased beyond limits to provide the necessary starting torque. However, due to size, weight, and cost considerations, this is not a desirable solution for electric vehicles.

EP 2 430 506 A1 is related to a method of controlling and conditioning electrical input current and voltage, providing a motor controller which modifies an input current to an alternating current motor. The motor controller comprises: a power input rectifier; a low voltage power supply; a variable output voltage circuit for adjusting a drive output voltage circuit; and a control circuit arranged to control the variable output voltage circuit and to provide timed waveforms to the drive output voltage circuit.

US 2012/086383 A1 proposes a method to allow the monitoring the mechanical velocity of the rotor of the asynchronous motor and maintain slip within a determined range so that the rotor can "follow" the frequency. The torque can also be determined and changed by letting the voltage remain constant. The slip control is achieved by applying an initial frequency in PWM pulse train to the motor by means of an electric control and drivers in the tri-phase inverter arrangement bridge.

Patent Application US 2009/0243523 A1 describes a control system comprising an electric rotary drive, i.e. a motor, and a drive circuit connected to a DC power supply, wherein the drive circuit includes an inverter unit such that engaging the electric rotary drive causes the inverter to transform the output of the DC power supply into AC (alternating-current) voltage. When using the electric rotary drive in regenerative mode, the inverter converts the output of the electric rotary drive to direct-current voltage. The known solution does not include a method for starting the engine with high torque.

Patent Application US 2009/0115362 A1 describes an electric motor control unit comprising a DC power source and an inverter coupled between the electric motor and the DC power source. The control unit uses a frequency control signal to control the operation of the inverter and thereby also the motor. This solution also does not include any method for starting the engine or providing the necessary starting torque.

Patent Application US 2009/0146615 A1 describes a hybrid vehicle drive, including a control system for an electric motor. The electric motor is controlled by a frequency converter coupled to a battery, according to the output signal received from a control unit.

This solution includes both an internal combustion engine and an asynchronous electric motor. The proper operation of both is needed to ensure the torque required to start the vehicle. The purpose of the present invention is to operate a purely electric vehicle without the use of a torque converter or any auxiliary starter motors.

Patent Application US 2017/0259825 A1 describes a control device for an electric vehicle, which uses a torque converter to achieve the torque needed to drive the motor. The purpose of the present invention is to provide sufficient torque for driving the motor, and in particular to provide sufficient starting torque, without the use of a torque converter.

Utility model CN 2632938 Y demonstrates an energy-saving method for controlling an AC electric motor using an inverter, through the control unit performing energy-saving calculations, noise filtering, and reducing harmonic and electromagnetic interference. This arrangement includes a special control device, and requires performing complicated calculations for controlling the motor. The purpose of the present invention, however, is to drive an asynchronous motor with a simple coupling arrangement, using an inverter designed and manufactured for industrial use.

Patent Application CN 101064460 A describes a three-phase asynchronous motor operating with low starting voltage (delta coupling) and higher operating voltage (star coupling). This is also a complicated solution, with a complex coupling arrangement and a control unit.

Patent Application CN 101734174 A describes an energy-saving method for controlling the motor of an electric vehicle. The arrangement involves the use of a pole changing motor (with 2-32 poles). Control is achieved by combining pole changing and frequency shifts (0.1 to 1000 Hz). Through controlling these shifts, it is possible to achieve a high starting torque, allowing the vehicle to be started on an incline, and ensuring high efficiency and low fuel consumption. The purpose of the present invention is similar to the control scheme outlined in said document, but our solution is simpler and does not require a complex pole changing motor.

Patent Application CN 105262299 A describes a control scheme for an asynchronous motor using an inverter. The motor contains two symmetrically coupled rotary sections.

Two inverters are used to drive the motor, with a fan mounted on the rotary shaft. This arrangement also involves a complicated coupling and control scheme.

Patent Application EP 2 099 122 A2 described the operation of an asynchronous motor using an inverter. If the motor is switched on but fails to start after a certain time has elapsed, the output frequency and/or voltage of the inverter is gradually reduced until the motor current falls below the maximum allowable starting current; this involves the motor operating at its nominal idle RPM and voltage. This arrangement includes a specially programmed control unit. The purpose of the present invention is using a program-controlled inverter designed and manufactured for industrial use to drive the motor, with the inverter configured according to the settings characteristic of our invention.

Electric vehicles using AC power, such as trolleybuses, trams, and electric locomotives do not need to be limited in their power consumption during the start up of their motor, as the grid can easily supply the required power. On the other hand, for vehicles using DC power, such as electric buses, garbage trucks, or cars, it is vital to use the energy stored in the battery as efficiently as possible, as the physical size of battery or batteries, and the range of the vehicle on a single battery charge are also important. Our goal was finding a simple, easy method for driving the motor of an electric vehicle, which we achieve without the use of a torque converter for the asynchronous motor. The physical size of the battery used for driving the asynchronous motor can be reduced by limiting the power required for starting the motor, as achieving the needed starting torque is when the motor requires the most power overall. While the power stored in the batteries does remain available, there is a limit to the amount of power that can be supplied within a short amount of time, meaning that the power requirement for starting the motor must be reduced. It is not possible to achieve our stated goals by keeping the parameters and operation of the program-controlled inverters designed and manufactured for industrial use within the limits recommended by their manufacturer. In other words, when starting the motor with an inverter operated in accordance with said recommendations, sufficient starting torque can only be achieved by using extremely heavy batteries that place a significant load on the vehicle. An additional problem presents itself, in that the starting torque needed for starting the vehicle would require an unnecessarily high-powered engine, which would likewise be extremely heavy and have high performance requirements of its own.

It became apparent to us, however, that if we use a parametrizable industrial inverter, set it to values that do not match its actual parameters, and use it as a control unit, we obtain the unexpected result of generating a greater-than-nominal starting torque, which ends up being sufficient for accelerating (starting) the electric car without having to use a torque converter. We found that if the parameters of the inverter are set to mimic the data of a motor with less power than the motor's actual power, in other words, if the inverter's program is operated using data that does not match the factory specifications of the motor coupled to it, than, having altered the parameters in accordance with our research and measurements, the inverter, though operating with its default factory programming, will nonetheless provide the motor with an output signal rendering it capable of delivering the required starting torque. Simply put, the modified operation of the inverter allows it to apply a higher excitation voltage than normal to the motor, as it assumes the motor to have thinner cables and therefore higher winding resistance than it actually has. As a result, the motor can be subjected to greater torque. What we have noted, therefore, is that if the inverter is not operated in accordance with the factory specifications, but rather is configured and operated using parameters that deviate from the recommended values, the motor connected to the inverter will operate according to our purposes, and not according to the nominal operating data. This mode of operation is not evident based on the inverter's factory description; it is a consequence of using control signals that deviate from the specification.

We recognized that program-controlled, parametrizable industrial inverters can usually be configured to regulate any sudden changes in power consumption to whatever degree is needed. If the downregulation is reduced and the inverter is more powerful than the nominal power output of the motor, the torque required for start-up can be achieved without the need for a torque converter.

An asynchronous motor coupled to an industrial inverter is only capable of dynamic load changes without using a torque converter if the inverter is configured for a motor with lower power output and/or lower nominal frequency than its actual values. This enables the inverter to generate greater excitation voltage, and therefore greater torque. This causes additional load, which we find can be offset by acceleration and deceleration time and characteristics. This does not cause significant operational restrictions for an electric vehicle, as the regular movement of the vehicle can still be maintained within normal traffic conditions. These false settings would normally overload the motor, but by programming the frequency converter, setting acceleration and deceleration times and characteristics, it is possible to prevent any such overload from occurring, as the inverter will downregulate before the magnetic core is overloaded.

Thus, our invention is a method for generating high starting torque in an asynchronous motor at a low power consumption, using a program-controlled, parametrizable inverter designed and manufactured for industrial use, with an increase of 20-40% in the inverter's power output compared to the nominal power value of the motor, by deviating from the manufacturer's recommendations while setting a number of the inverter's operational parameters, namely, by setting the nominal output of the motor to a value between 70% and 90% of the actual nominal output, by setting the nominal frequency of the motor to a value between 70% and 95% of the actual nominal frequency, and by setting the nominal voltage of the motor to a value between 105% and 120% of the actual nominal voltage, and powering the asynchronous motor via a battery in such a way that the battery output voltage is connected to the frequency converter's DC terminals, and using the asynchronous motor to drive an electric vehicle through creating an operational connection between the asynchronous motor and the electric vehicle's wheel axle.

Selecting an inverter with a 20% to 40% higher power output than the nominal power of the motor is dependent on the standard power supply industrial inverters available. For example, a 100 kW motor would require the use of a 132 kW inverter, one power category higher. Within the specified ranges, optimal values can be set depending on the motor' s operating conditions. For instance, the type of load on the motor and the expected duration of operation (the time after which the motor can cool down again) should both be taken into account. For continuous, long-term operation, the inverter parameters should be set to within the specified range, closer to the nominal values. On the other hand, if short-term, high acceleration is desired, the parameters should deviate more from the nominal values.

To prevent the asynchronous motor from overheating, an intensive cooling solution should be provided. Fan or oil cooling are both possible.

If a DC power source, that is, a battery is used for powering the motor, the battery's output voltage should be connected to the inverter's DC terminals, thus operating the asynchronous motor as a DC converter.

In this case, the energy generated by the motor slowing down should be used to magnetize the motor and power the auxiliary systems - using the motor as a generator, as described above - , with any remaining energy fed back to the battery. This will help reduce the load on the battery. Thus, during deceleration, the recoverable energy is fed back into the battery, using the motor as a generator.

An asynchronous motor powered by the inverter as described above can be operated with a high starting torque without increasing its power consumption, meaning that if the motor is powered by an inverter with a battery connected to a DC terminal, and any power generated by braking power is fed back to the battery, the battery load can be kept low. By keeping the required peak power low, it is possible to keep the needed battery power density and thus battery size to a minimum. This arrangement can also be used to power an electric vehicle, by coupling the asynchronous motor to the vehicle's wheel axle. This arrangement will then be capable of powering the electric vehicle in question.

By setting the acceleration time from start-up to the motor's operational speed higher than the manufacturer's recommendations, overheating can be further mitigated. Naturally, this parameter should also be set according to the operational conditions: if rapid acceleration of the engine is not required, and reliable, energy- efficient operation is held to be more important, it is appropriate to increase acceleration time. Otherwise, for instance, when using the asynchronous motor to power an electric racing car, the motor should be allowed to accelerate rapidly, as continuous long-term operation is not a requirement in this case. In this latter case, providing an intensive cooling solution is vital. Thus, our invention involves reducing the inverter's overheating by increasing the acceleration time required to reach maximum engine speed when adjusting the operating parameters of the inverter, setting it to a multiple of the value recommended by the manufacturer, preferably between 6 and 8 times that value. Extending the deceleration time required for the engine to come to a full stop can also improve driving stability. Thus, when adjusting the operating parameters of the inverter, to increase driving stability of the vehicle, the braking time required for the motor to come to a full stop is set to a multiple of the value recommended by the manufacturer, preferably between 2 and 3 times that value.

Naturally, it may become necessary to bring the electric vehicle to a rapid stop, and a pneumatic brake will be available in the vehicle for such a purpose.

An example for the embodiment of the invention:
We used a program-controlled, parametrizable inverter to operate an asynchronous electric motor with iron housing, rated for 90 kW, with coils rated for 110 kW. As per the method relevant to the present invention, we configured the parameters of the inverter with values corresponding to a motor with a nominal output of 75 kW. With these settings, the starting torque of the motor reached 1500 Nm, and it proved capable of providing 160 kW of output. The method relevant to the present invention allowed the motor to produce greater starting torque than a 160 kW motor would have been capable of with settings configured according to the manufacturer's recommendations.

Extending the deceleration time required for the engine to come to a full stop can also improve driving stability. Thus, when adjusting the operating parameters of the inverter, to increase driving stability of the vehicle, the braking time required for the motor to come to a full stop is set to a multiple of the value recommended by the manufacturer, preferably between 2 and 3 times that value.

Naturally, it may become necessary to bring the electric vehicle to a rapid stop, and a pneumatic brake will be available in the vehicle for such a purpose.

An example for the embodiment of the invention:
We used a program-controlled, parametrizable inverter to operate an asynchronous electric motor with iron housing, rated for 90 kW, with coils rated for 110 kW. As per the method relevant to the present invention, we configured the parameters of the inverter with values corresponding to a motor with a nominal output of 75 kW.

With these settings, the starting torque of the motor reached 1500 Nm, and it proved capable of providing 160 kW of output. The method relevant to the present invention allowed the motor to produce greater starting torque than a 160 kW motor would have been capable of with settings configured according to the manufacturer's recommendations.

## Claims

1. A method for generating high starting torque in an asynchronous motor at a low power consumption, using a program-controlled, parametrizable inverter designed and manufactured for industrial use, **characterized by** an increase of 20- 40% in the inverter's power output compared to the nominal power value of the motor, as well as by deviating from the manufacturer's recommendations while setting a number of the inverter's operational parameters, namely, by setting the nominal power output of the motor to a value between 70% and 90% of the actual nominal power output by setting the nominal frequency of the motor to a value between 70% and 95% of the actual nominal frequency, and by setting the nominal voltage of the motor to a value between 105% and 120% of the actual nominal voltage, and powering the asynchronous motor via a battery in such a way that the battery output voltage is connected to the frequency converter's DC terminals, and using the asynchronous motor to drive an electric vehicle through creating an operational connection between the asynchronous motor and the electric vehicle's wheel axle.

2. A method according to Claim 1, **characterized in that** using intensive cooling for the operation of the asynchronous motor.

3. A method according to Claim 2, **characterized in that** using ventilation cooling for the operation of the asynchronous motor.

4. A method according to Claim 2, **characterized in that** using oil cooling for the operation of the asynchronous motor.

5. A method according to any of the previous Claims, **characterized in that** feeding the recoverable energy back into the battery during deceleration, using the motor as a generator.

6. A method according to any of the previous Claims, **characterized in that** when adjusting the operating parameters of the inverter, to reduce its overheating, the acceleration time required to reach maximum engine speed is set to a multiple of the value recommended by the manufacturer, preferably between 6 and 8 times that value.

7. A method according to any of the previous Claims, **characterized in that** when adjusting the operating parameters of the inverter, to increase the driving stability of the vehicle, the braking time required for the motor to come to a full stop is set to a multiple of the value recommended by the manufacturer, preferably between 2 and 3 times that value.

## Patentansprüche

1. Verfahren zur Erzeugung eines hohen Anlaufdrehmoments in einem Asynchronmotor bei geringer Leistungsaufnahme unter Verwendung eines programmgesteuerten, parametrierbaren Umrichters, der für den industriellen Einsatz ausgelegt und hergestellt ist, **gekennzeichnet durch** eine Erhöhung der Ausgangsleistung des Umrichters um 20-40 % im Vergleich zum Nennleistungswert des Motors sowie durch Abweichung von den Empfehlungen des Herstellers bei der Einstellung einer Reihe von Betriebsparametern des Wechselrichters, nämlich durch Einstellen der Nennleistungsabgabe des Motors auf einen Wert zwischen 70 % und 90 % der tatsächlichen Nennleistung, durch Einstellen der Nennfrequenz des Motors auf einen Wert zwischen 70 % und 95 % der tatsächlichen Nennfrequenz und durch Einstellen der Nennspannung des Motors auf einen Wert zwischen 105 % und 120 % der tatsächlichen Nennspannung, und Antreiben des Asynchronmotors über eine Batterie derart, dass die Batterieausgangsspannung mit den DC-Klemmen des Frequenzumrichters verbunden ist, und Verwenden des Asynchronmotors zum Antreiben eines Elektrofahrzeugs durch Ankoppeln des Asynchronmotors an eine Radachse des Elektrofahrzeugs.

2. Verfahren nach Anspruch 1, **dadurch gekennzeichnet, dass** für den Betrieb des Asynchronmotors eine intensive Kühlung verwendet wird.

3. Verfahren nach Anspruch 2, **dadurch gekennzeichnet, daß** man für den Betrieb des Asynchronmotors ein Belüftungskühlung verwendet.

4. Verfahren nach Anspruch 2, **dadurch gekennzeichnet, daß** für den Betrieb des Asynchronmotors eine Ölkühlung verwendet wird.

5. Verfahren nach einem der vorangehenden Ansprüche, **dadurch gekennzeichnet, dass** die rückgewinnbare Energie während des Verzögerns unter Verwendung des Motors als Generator zurück in die Batterie gespeist wird.

6. Verfahren nach einem der vorhergehenden Ansprüche, **dadurch gekennzeichnet, dass** bei der Einstellung der Betriebsparameter des Wechselrichters zur Verringerung seiner Überhitzung die zum Erreichen der maximalen Motordrehzahl erforderliche Beschleunigungszeit auf ein Vielfaches des vom Hersteller empfohlenen Wertes eingestellt wird , vorzugsweise zwischen dem 6- und 8-fachen dieses Wertes.

7. Verfahren nach einem der vorhergehenden Ansprüche, **dadurch gekennzeichnet, dass** beim Anpassen der Betriebsparameter des Umrichters zur Erhöhung der Fahrstabilität des Fahrzeugs die zum vollständigen Stillstand des Motors benötigte Bremszeit auf ein Vielfaches des vom Hersteller empfohlenen Wertes, vorzugsweise zwischen dem 2- und 3-fachen dieses Wertes, eingestellt wird.

## Revendications

1. Procédé pour générer un haut couple de démarrage dans un moteur asynchrone à une basse consommation de puissance, en utilisant un onduleur, qui peut être paramétré, commandé par programme, conçu et fabriqué pour utilisation industrielle, **caractérisé par** une augmentation de 20 à 40 % dans la puissance de sortie de l'onduleur par rapport à la valeur de puissance nominale du moteur, ainsi que par le fait de s'écarter des recommandations du fabricant tout en réglant un nombre de paramètres de fonctionnement de l'onduleur, à savoir, en réglant la puissance de sortie nominale du moteur à une valeur entre 70 % et 90 % de la puissance de sortie nominale réelle, en réglant la fréquence nominale du moteur à une valeur entre 70 % et 95 % de la fréquence nominale réelle, et en réglant la tension nominale du moteur à une valeur entre 105 % et 120 % de la tension nominale réelle, et l'alimentation du moteur asynchrone par l'intermédiaire d'une batterie de manière telle que la tension de sortie de batterie soit connectée aux bornes CC du convertisseur de fréquence, et l'utilisation du moteur asynchrone pour entraîner un véhicule électrique par le biais de la création d'une connexion de fonctionnement entre le moteur asynchrone et le train de roues du véhicule électrique.

2. Procédé selon la revendication 1, **caractérisé par** l'utilisation de refroidissement intensif pour le fonctionnement du moteur asynchrone.

3. Procédé selon la revendication 2, **caractérisé par** l'utilisation de refroidissement par ventilation pour le fonctionnement du moteur asynchrone.

4. Procédé selon la revendication 2, **caractérisé par** l'utilisation de refroidissement par huile pour le fonctionnement du moteur asynchrone.

5. Procédé selon l'une quelconque des revendications précédentes, **caractérisé par** la réintroduction de l'énergie récupérable dans la batterie durant la décélération, en utilisant le moteur en tant que générateur.

6. Procédé selon l'une quelconque des revendications précédentes, **caractérisé en ce que**, lors de l'ajustement des paramètres de fonctionnement de l'onduleur, pour réduire sa surchauffe, le temps d'accélération nécessaire pour atteindre une vitesse de moteur maximum est réglé à un multiple de la valeur recommandée par le fabricant, de préférence entre 6 et 8 fois cette valeur.

7. Procédé selon l'une quelconque des revendications précédentes, **caractérisé en ce que**, lors de l'ajustement des paramètres de fonctionnement de l'onduleur, pour augmenter la stabilité de conduite du véhicule, le temps de freinage nécessaire pour que le moteur arrive à un arrêt complet est réglé à un multiple de la valeur recommandée par le fabricant, de préférence entre 2 et 3 fois cette valeur.
